# EUROPEAN PATENT APPLICATION

(11) **EP 4 507 051 A2**
(43) Date of publication of application: **12.02.2025**
(21) Application number: 24190182.6
(22) Date of filing: 23.07.2024
(51) Int. Cl.: H01M 10/0525, H01M 10/0567, H01M 10/0569

(54) **RECHARGEABLE LITHIUM BATTERY**

(30) Priority: 27.07.2023 KR 20230098399
(71) Applicant: SAMSUNG SDI CO., LTD., Giheung-gu Yongin-si, Gyeonggi-do 17084 (KR)
(72) Inventor: Lee, Harim, 17084 Yongin-si, Gyeonggi-do (KR); Bae, Tae Hyon, 17084 Yongin-si, Gyeonggi-do (KR); Kim, Sanghyung, 17084 Yongin-si, Gyeonggi-do (KR); Son, Seunghyeon, 17084 Yongin-si, Gyeonggi-do (KR); Shin, Youngkyeong, 17084 Yongin-si, Gyeonggi-do (KR); Kim, Sanghoon, 17084 Yongin-si, Gyeonggi-do (KR); Yu, Arum, 17084 Yongin-si, Gyeonggi-do (KR)
(74) Representative: Gulde & Partner

(57) **Abstract**

Disclosed is a rechargeable lithium battery, the rechargeable lithium battery including a positive electrode including a positive electrode active material; a negative electrode including a negative electrode active material; and an electrolyte, wherein an active mass density of the negative electrode is greater than or equal to 1.7 g/cc, and the electrolyte includes a lithium salt; a non-aqueous organic solvent; a first additive represented by Chemical Formula 1; a second additive represented by Chemical Formula 2; and a third additive represented by Chemical Formula 3. The description of each chemical formula is provided in the specification.

Chemical Formula 1 R¹-O -R²

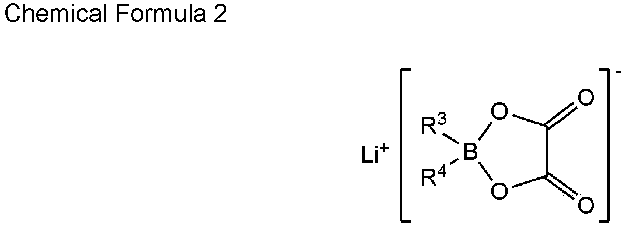

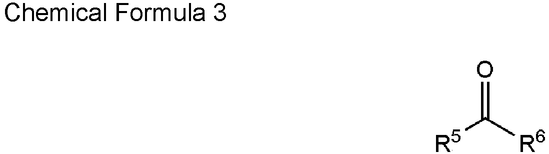

## Description

### BACKGROUND

### 1. Field

Rechargeable lithium batteries are disclosed.

### 2. Description of the Related Art

Recently, with the rapid spread of electronic devices that use batteries, such as, for example, mobile phones, laptop computers, and electric vehicles, interest in rechargeable batteries having high energy density and high capacity is rapidly increasing. Accordingly, research and development to improve the performance of rechargeable lithium batteries is actively underway.

A rechargeable lithium battery includes a positive electrode and a negative electrode including an active material capable of intercalating and deintercalating lithium ions, and an electrolyte, and electrical energy is produced through oxidation and reduction reactions if lithium ions are intercalated/deintercalated from the positive electrode and negative electrode.

One of the recent development directions for rechargeable lithium batteries is to increase the density of the negative electrode. However, if the density of the negative electrode is increased, void volumes decrease, which increases the amount of electrolyte impregnated into the negative electrode, thereby causing an increase in a thickness of the battery and a decrease of cycle-life.

### SUMMARY

The invention is defined by the appended claims. The description that follows is subjected to this limitation. Any disclosure lying outside the scope of said claims is only intended for illustrative as well as comparative purposes. Some embodiments of the present disclosure provide a rechargeable lithium battery that increases the density of the negative electrode and suppresses or reduces the increase in thickness and decrease in cycle-life of the battery that would otherwise occur.

The present invention provides a rechargeable lithium battery as defined in claim 1 including a positive electrode including a positive electrode active material; a negative electrode including a negative electrode active material; and an electrolyte, wherein an active mass density of the negative electrode is greater than or equal to 1.7 g/cc, and the electrolyte includes a lithium salt; a non-aqueous organic solvent; a first additive represented by Chemical Formula 1; a second additive represented by Chemical Formula 2; and a third additive represented by Chemical Formula 3:

Chemical Formula 1 R¹-O-R²

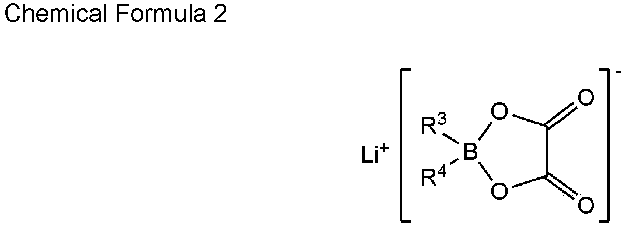

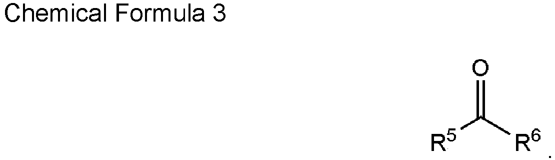

The rechargeable lithium battery according to some embodiments can increase the density of the negative electrode while suppressing or reducing an increase in battery thickness and a decrease in cycle-life that would otherwise occur.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

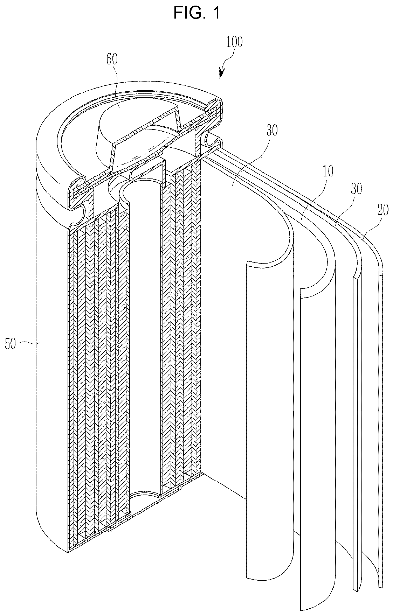

FIGS. 1-4 are schematic views showing rechargeable lithium batteries according to some embodiments.

### DETAILED DESCRIPTION

Hereinafter, embodiments of the present disclosure will be described in more detail. However, these embodiments are examples, the present disclosure is not limited thereto and the present disclosure is defined by the scope of the appended claims, and equivalents thereof.

As used herein, if specific definition is not otherwise provided, it will be understood that if an element such as a layer, film, region, or substrate is referred to as being "on" another element, it can be directly on the other element or intervening elements may also be present.

As used herein, "a combination thereof" may mean a mixture of constituents, a stack, a composite, a copolymer, an alloy, a blend, and/or a reaction product.

As used herein, the "active mass density of the negative electrode" is a value calculated by dividing a weight of the components (active material, conductive material (e.g., electrically conductive material), binder, etc.) excluding the current collector in the negative electrode by a volume thereof.

As used herein, if a definition is not otherwise provided, in chemical formulae, hydrogen is bonded at a position if a chemical bond is not drawn where supposed to be given.

As used herein, "fluoroalkyl group" refers to an alkyl group in which some or all of the hydrogen atoms are replaced by fluorine atoms.

As used herein, "perfluoroalkyl group" refers to an alkyl group in which all hydrogen atoms are replaced by fluorine atoms.

### Rechargeable Lithium Battery

A rechargeable lithium battery includes a positive electrode including a positive electrode active material; a negative electrode including a negative electrode active material; and an electrolyte, wherein an active mass density of the negative electrode is greater than or equal to 1.7 g/cc, and the electrolyte includes a lithium salt; a non-aqueous organic solvent; a first additive represented by Chemical Formula 1; a second additive represented by Chemical Formula 2; and a third additive represented by Chemical Formula 3:

Chemical Formula 1 R¹-O - R²

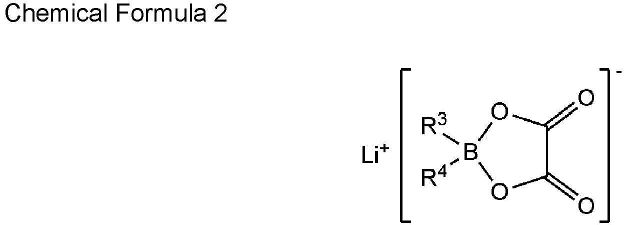

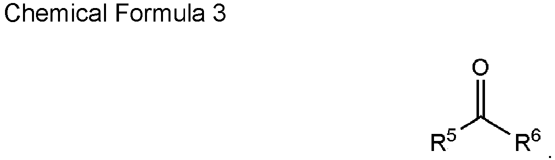

The first additive and third additive each function as a surfactant having both hydrophilic and hydrophobic groups in one molecule.

The first additive includes an ether group at a main chain (e.g., at the center) and a fluorine atom or a C1 to C10 fluoroalkyl group on both sides (e.g., at opposite sides of the main chain or center). Herein, the ether group is a hydrophilic group, and the fluorine atom or C1 to C10 fluoroalkyl group is a hydrophobic group.

The third additive includes a ketone group at the center and fluorine atoms or fluoroalkyl groups of 1 to 10 carbon atoms on both sides. Herein, the ketone group is a hydrophilic group, and the fluorine atom or fluoroalkyl group having 1 to 10 carbon atoms is a hydrophobic group.

Accordingly, if an electrolyte including the first additive and the third additive concurrently (e.g., simultaneously) is used, wettability of the positive electrode and negative electrode is improved, lithium cation (Li⁺) are uniformly formed at the interface between the positive electrode and the electrolyte, and a stable SEI film is formed at the interface between the negative electrode and the electrolyte, thereby suppressing or reducing the precipitation of lithium dendrites.

The second additive is an oxalate borate compound substituted with a fluoro group, where the fluoro group stabilizes the lithium salt (e.g., LiPF₆).

Accordingly, if an electrolyte including the second additive is used, production of HF may be suppressed or reduced, and transition metal elution from the positive electrode active material and damage to the SEI film at the interface between the negative electrode and the electrolyte may be prevented or reduced.

Therefore, by using an electrolyte including the first additive to the third additive, while increasing the active mass density of the negative electrode to 1.7 g/cc or more, the increase in battery thickness and decrease in cycle-life that would otherwise occur (e.g., as a result of the high active mass density) may be suppressed or reduced.

Hereinafter, a rechargeable lithium battery according to some embodiments will be described in more detail.

### Active Mass Density of Negative Electrode

Generally, rechargeable lithium batteries use a negative electrode having an active mass density of less than 1.7 g/cc, but a rechargeable lithium battery according to some embodiments uses a negative electrode including a mixture density (e.g., an active mass density) of greater than or equal to 1.7 g/cc.

The upper limit for the active mass density of the negative electrode is not particularly limited, but may be less than or equal to 2.0 g/cc, less than or equal to 1.9 g/cc, or less than or equal to 1.8 g/cc.

### First Additive

In Chemical Formula 1, R¹ and R² are each independently a fluorine atom or a C1 to C10 fluoroalkyl group.

For example, R¹ may be a fluoroalkyl group having 2 carbon atoms.

In some embodiments, R² may be a fluoroalkyl group having 3 carbon atoms.

The first additive may be represented by Chemical Formula 1-1:

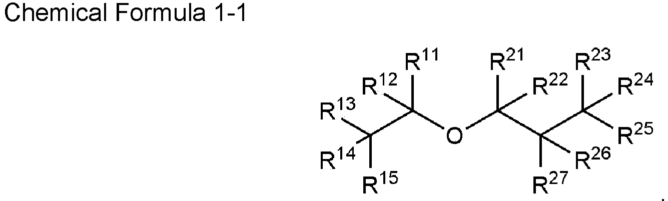

In Chemical Formula 1-1, R¹¹ to R¹⁵ are each a hydrogen atom or a fluorine atom, provided that at least one selected from R¹¹ to R¹⁵ is a fluorine atom; and R²¹ to R²⁷ are each a hydrogen atom or a fluorine atom, provided that at least one selected from R²¹ to R²⁷ is a fluorine atom.

A representative example of the first additive is as follows:

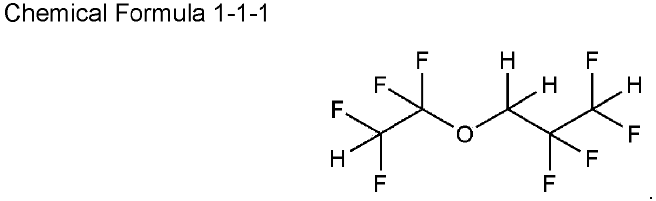

### Second Additive

In Chemical Formula 2, R³ and R⁴ are each independently a halogen atom or a C1 to C10 fluoroalkyl group.

For example, both R³ and R⁴ may be fluorine atoms.

A representative example of the second additive is as follows:

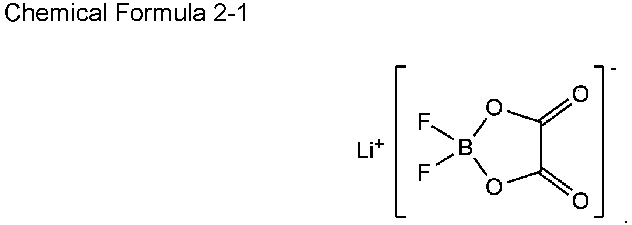

The second additive represented by Chemical Formula 2-1 is lithium difluoro(oxalato)borate (LiDFOB).

### Third Additive

In Chemical Formula 3, R⁵ and R⁶ are each independently a fluorine atom or a C1 to C10 fluoroalkyl group.

For example, R⁵ may be a fluoroalkyl group or a perfluoroalkyl group having 2 carbon atoms.

In some embodiments, R⁶ may be a fluoroalkyl group (e.g., a fluoroalkyl group having 3 carbon atoms) or a perfluoroalkyl group having 3 carbon atoms.

The third additive may be represented by Chemical Formula 3-1:

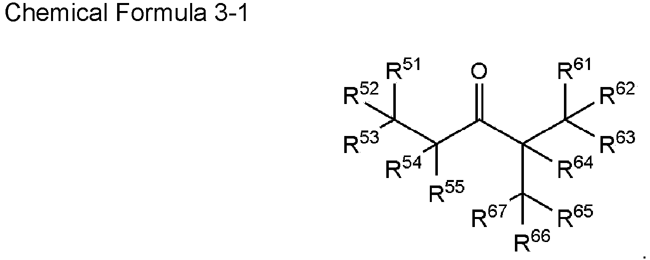

In Chemical Formula 3-1, R⁵¹ to R⁵⁵ are each a hydrogen atom or a fluorine atom, provided that at least one selected from R⁵¹ to R⁵⁵ is a fluorine atom; and R⁶¹ to R⁶⁷ are each a hydrogen atom or a fluorine atom, provided that at least one selected from R⁶¹ to R⁶⁷ is a fluorine atom.

A representative example of the third additive is as follows:

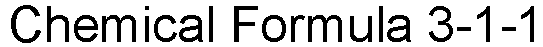

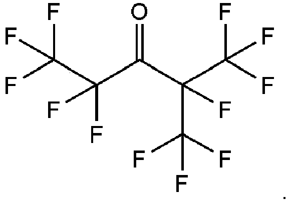

### Contents of the First Additive to the Third Additive

The first additive may be included in an amount of 1 to 20 wt%, 1 to 15 wt%, or 1 to 10 wt% based on a total amount of the electrolyte.

If the first additive is included in excess of the above ranges, viscosity of the electrolyte including the first additive may increase excessively, and wettability of the positive electrode and the negative electrode may actually decrease. If the content of the first additive is included in a small amount below the above ranges, the effect as a surfactant may be minimal or reduced.

The second additive may be included in an amount of 0.1 to 10 wt%, 0.5 to 5 wt%, or 1 to 2 wt% based on a total amount of the electrolyte.

If the second additive is included in excess of the above ranges, a side reaction may occur. If the content of the second additive is included in a small amount below the above ranges, the effect may be minimal or reduced.

The third additive may be included in an amount of 1 to 10 wt%, 1 to 7 wt%, or 1 to 5 wt% based on a total amount of the electrolyte.

If the third additive is included in excess of the above ranges, viscosity of the electrolyte including the third additive may increase excessively, and wettability of the positive electrode and negative electrode may actually decrease. If the content of the third additive is included in a small amount below the above ranges, the effect as a surfactant may be minimal or reduced.

Based on 10 parts by weight of the first additive, 1 to 100 parts by weight of the second additive may be included, and 1 to 100 parts by weight of the third additive may be included.

For example, based on 10 parts by weight of the first additive, 2 to 50 parts by weight of the second additive may be included, and 2 to 50 parts by weight of the third additive may be included.

For example, based on 10 parts by weight of the first additive, 5 to 20 parts by weight of the second additive may be included, and 5 to 20 parts by weight of the third additive may be included.

Within these ranges, the effects of the first to third additives may be harmonized (e.g., may provide a synergistic effect).

### Non-aqueous Organic Solvent

The non-aqueous organic solvent serves as a medium for that transmits ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methyl propionate, ethyl propionate, propyl propionate, decanolide, mevalonolactone, valerolactone, caprolactone, and/or the like

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethyl alcohol, isopropyl alcohol, and/or the like, and the aprotic solvent may include nitriles such as R-CN (wherein R is a C2 to C20 linear, branched, and/or cyclic hydrocarbon group, a double bond, an aromatic ring, and/or an ether group), amides such as dimethylformamide, dioxolanes such as, for example, 1 ,3-dioxolane and/or 1,4-dioxolane, sulfolanes, and/or the like.

The non-aqueous organic solvent may be used alone or in combination of two or more.

In embodiments where the non-aqueous organic solvent is used in combination of two or more, the non-aqueous organic solvent may include a carbonate-based solvent and a propionate-based solvent.

The total amount of the propionate-based solvent may be included in an amount of greater than or equal to 70 volume% based on a total amount of the non-aqueous organic solvent. In some embodiments, high-voltage and/or high-temperature characteristics of the rechargeable lithium battery may be improved.

For example, the non-aqueous organic solvent may be a mixed solvent including ethylene carbonate (EC), propylene carbonate (PC), ethyl propionate (EP), and propyl propionate (PP).

### Lithium Salt

The lithium salt dissolved in the organic solvent supplies lithium ions in a battery, enables a basic operation of a rechargeable lithium battery, and improves transportation of the lithium ions between positive and negative electrodes.

LiPF₆ may be used as the lithium salt.

A concentration of the lithium salt may be 0.1 M to 2.0 M.

### Positive Electrode Active Material

The positive electrode active material may be a compound (lithiated intercalation compound) capable of intercalating and deintercalating lithium. In some embodiments, one or more types (or kinds) of composite oxides of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may have a nickel content of greater than or equal to 80 mol%, greater than or equal to 85 mol%, greater than or equal to 90 mol%, greater than or equal to 91 mol%, or greater than or equal to 94 mol% based on 100 mol% of metals excluding lithium in the lithium transition metal composite oxide, and the positive electrode active material may be a high nickel-based positive electrode active material having a nickel content of less than or equal to 99 mol% based on 100 mol% of metals excluding lithium in the lithium transition metal composite oxide. The high-nickel-based positive electrode active materials can achieve high capacity and can be applied to high-capacity, high-density rechargeable lithium batteries.

The positive electrode active material may be, for example, a lithium nickel-based oxide represented by Chemical Formula 11, a lithium cobalt-based oxide represented by Chemical Formula 12, a lithium iron phosphate-based compound represented by Chemical Formula 13, and a cobalt-free lithium nickel manganese-based oxide represented by Chemical Formula 14, or a combination thereof.

Chemical Formula 11 Lia₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sn, Sr, Ti, V, W, and Zr, and X is one or more elements selected from F, P, and S.

In some embodiments, in Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12 Liₐ₂COₓ₂M³ _{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is one or more elements selected from Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from F, P, and S.

Chemical Formula 13 Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is one or more elements selected from Al, B, Ba, Ca, Ce, Co, Cr, Cu, Mg, Mn, Mo, Ni, Se, Si, Sn, Sr, Ti, V, W, Y, Zn, and Zr, and X is one or more elements selected from F, P, and S.

Chemical Formula 14 Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1 M⁵ is one or more elements selected from Al, B, Ba, Ca, Ce, Cr, Fe, Mg, Mo, Nb, Si, Sn, Sr, Ti, V, W, and Zr, and X is one or more elements selected from F, P, and S.

In some embodiments, the electrolyte of the above-described embodiments can significantly improve high-voltage and/or high-temperature characteristics of a battery using the lithium cobalt-based oxide represented by Chemical Formula 12.

### Positive Electrode

The positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can function as a sacrificial positive electrode.

A content of the positive electrode active material may be 90 wt% to 99.5 wt%, and a content of the binder and the conductive material may be 0.5 wt% to 5 wt%, respectively based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder and/or a metal fiber; a conductive polymer (e.g., an electrically conductive polymer) such as a polyphenylene derivative; or a mixture thereof.

Al may be used as the current collector, but is not limited thereto.

### Negative Electrode Active Material

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x < 2), and/or a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0.5 wt% to 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, it may further include a cellulose-based compound capable of imparting or increasing viscosity. The cellulose-based compound includes one or more of carboxylmethyl cellulose, hydroxypropylmethyl cellulose, methyl cellulose, or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity (e.g., electrical conductivity), and any suitable electrically conductive material may be used as a conductive material unless it causes a chemical change (e.g., an undesirable change in the rechargeable lithium battery). Examples of the conductive material may be a carbon-based material such as natural graphite, artificial graphite, carbon black, acetylene black, ketjen black, a carbon fiber, a carbon nanofiber, a carbon nanotube, and the like; a metal-based material such as copper, nickel, aluminum silver, and the like in a form of a metal powder and/or a metal fiber; a conductive polymer (e.g., an electrically conductive polymer) such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from polymer polyolefin such as, for example, polyethylene and/or polypropylene, polyester such as, for example, polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and/or polytetrafluoroethylene, or a copolymer or mixture of two or more thereof.

The organic material may include a polyvinylidene fluoride-based polymer and/or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto.

The organic material and the inorganic material may be mixed together in one coating layer, or a coating layer including an organic material and a coating layer including an inorganic material may be stacked.

### Rechargeable Lithium Battery

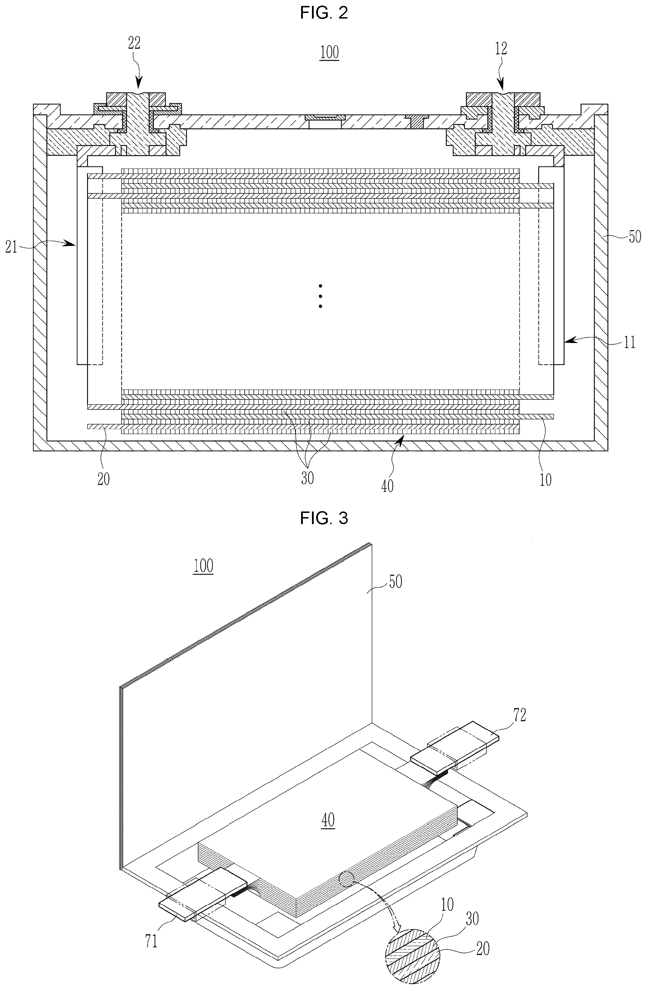

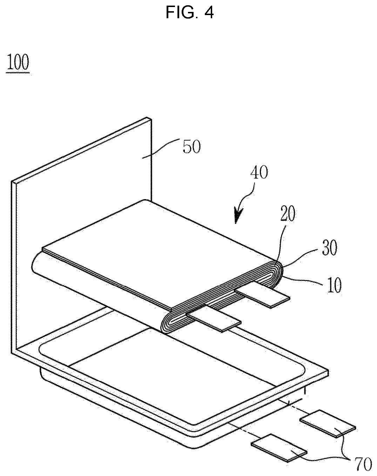

The rechargeable lithium battery may be classified into cylindrical, prismatic, pouch, or coin-type batteries, and/or the like depending on their shape. FIGS. 1-4 are schematic views illustrating rechargeable lithium batteries according to embodiments. FIG. 1 shows a cylindrical battery, FIG. 2 shows a prismatic battery, and FIGS. 3-4 show pouch-type batteries. Referring to FIGS. 1-4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte. The rechargeable lithium battery 100 may include a sealing member 60 that seals the case 50, as shown in FIG. 2. In FIG. 2, the rechargeable lithium battery 100 may include a positive lead tab 11, a positive terminal 12, a negative lead tab 21, and a negative terminal 22. As shown in FIGS. 3-4, the rechargeable lithium battery 100 may include an electrode tab 70 (FIG. 4), which may be, for example, a positive electrode tab 71 and a negative electrode tab 72 (FIG. 3) that serve as an electrical path for inducing the current formed in the electrode assembly 40 to the outside.

The rechargeable lithium battery according to some embodiments may be applied to automobiles, mobile phones, and/or various suitable types (or kinds) of electrical devices, but the present disclosure is not limited thereto.

Hereinafter, examples of the present disclosure and comparative examples are described. These examples, however, are not in any sense to be interpreted as limiting the scope of the present disclosure.

### Examples and Comparative Examples

### Electrolytes and rechargeable lithium battery cells were prepared as follows.

### Example 1

### (1) Preparation of Electrolyte

1.3 M LiPF₆ was dissolved in a non-aqueous organic solvent in which ethylene carbonate (EC), propylene carbonate (PC), ethyl propionate (EP), and propyl propionate (PP) were mixed together in a volume ratio of 10:15:30:45, and 5 wt% of the first additive, 1 wt% of the second additive, and 1 wt% of the third additive were added thereto to prepare an electrolyte.

The first additive represented by Chemical Formula 1-1-1 was used, the second additive represented by Chemical Formula 2-1 was used, and the third additive represented by Chemical Formula 3-1-1 was used:

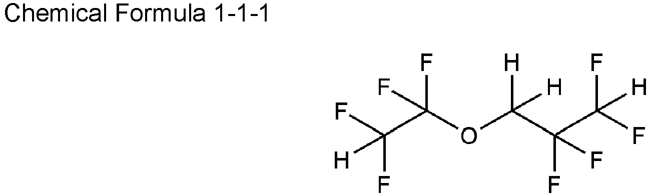

1,1,2,2-Tetrafluoroethyl2,2,3,3-tetrafluoropropylether (CAS No.: 16627-68-2)

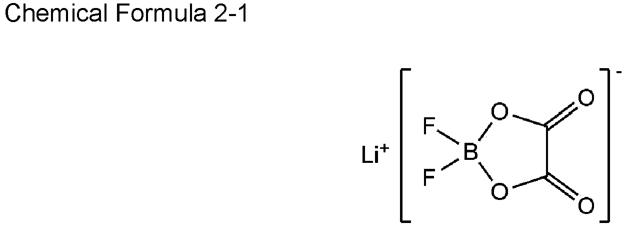

Lithium difluoro(oxalato)borate (LiDFOB, CAS No.: 409071-16-5)

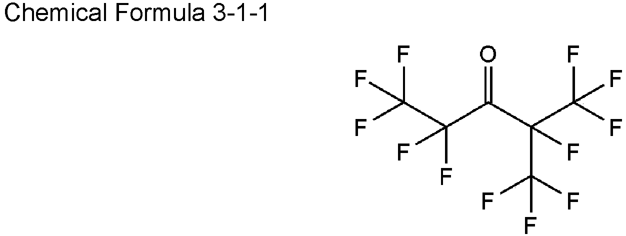

Perfluoro (2-methyl-3-pentanone) (CAS No.: 756-13-8).

### (2) Manufacture of Rechargeable Lithium Battery Cells

LiCoO₂ as a positive electrode active material, polyvinylidene fluoride as a binder, and acetylene black as a conductive material were mixed together respectively in a weight ratio of 96:3:1, and then, dispersed in N-methyl pyrrolidone to prepare a positive electrode active material slurry.

The positive electrode active material slurry was coated on a 15 µm-thick Al foil, dried at 100 °C, and pressed to manufacture a positive electrode.

Artificial graphite as a negative electrode active material, a styrene-butadiene rubber binder, and carboxylmethyl cellulose in a weight ratio of 98:1:1 were dispersed in distilled water to prepare a negative electrode active material slurry.

The negative electrode active material slurry was coated on a 10 µm-thick Cu foil, dried at 100 °C, and pressed to manufacture a negative electrode. At this time, an active mass density of the negative electrode was set to 1.7 g/cc.

An electrode assembly was manufactured by assembling the positive electrode, the negative electrode, and a separator made of polyethylene having a thickness of 10 µm, and the electrolyte was injected, to manufacture a rechargeable lithium battery cell.

### Example 2

An electrolyte and a rechargeable lithium battery cell were prepared in the same manner as in Example 1, except that the electrolyte was prepared by adding 10 wt% of the first additive, 1 wt% of the second additive, and 1 wt% of the third additive.

### Example 3

An electrolyte and a rechargeable lithium battery cell were prepared in the same manner as in Example 1, except that the electrolyte was prepared by adding 10 wt% of the first additive, 1 wt% of the second additive, and 2 wt% of the third additive.

### Example 4

An electrolyte and a rechargeable lithium battery cell were prepared in the same manner as in Example 1, except that the electrolyte was prepared by adding 10 wt% of the first additive, 1 wt% of the second additive, and 2 wt% of the third additive, and the negative electrode was manufactured to have an active mass density of 1.75 g/cc.

### Example 5

An electrolyte and a rechargeable lithium battery cell were prepared in the same manner as in Example 1, except that the electrolyte was prepared by adding 10 wt% of the first additive, 1 wt% of the second additive, and 2 wt% of the third additive, and the negative electrode was manufactured to have an active mass density of 1.8 g/cc.

### Comparative Example 1

An electrolyte and a rechargeable lithium battery cell were prepared in the same manner as in Example 1, except that the electrolyte was prepared by adding no additives at all, and the negative electrode was manufactured to have an active mass density of 1.65 g/cc.

### Comparative Example 2

An electrolyte and a rechargeable lithium battery cell were prepared in the same manner as in Example 1, except that the electrolyte was prepared by adding no additives at all, and the negative electrode was manufactured to have an active mass density of 1.67 g/cc.

### Comparative Example 3

An electrolyte and a rechargeable lithium battery cell were prepared in the same manner as in Example 1, except that the electrolyte was prepared by adding no additives at all, and the negative electrode was manufactured to have an active mass density of 1.7 g/cc.

### Comparative Example 4

An electrolyte and a rechargeable lithium battery cell were prepared in the same manner as in Example 1, except that the electrolyte was prepared by adding 10 wt% of the first additive while not adding the second additive and third additive, and the negative electrode was manufactured to have an active mass density of 1.7 g/cc.

### Comparative Example 5

An electrolyte and a rechargeable lithium battery cell were prepared in the same manner as in Example 1, except that the electrolyte was prepared by adding 1 wt% of the second additive while not adding the first additive and third additive, and the negative electrode was manufactured to have an active mass density of 1.7 g/cc.

### Comparative Example 6

An electrolyte and a rechargeable lithium battery cell were prepared in the same manner as in Example 1 except that the electrolyte was prepared by adding 1 wt% of the third additive while not adding the first additive and second additive, and the negative electrode was manufactured to have an active mass density of 1.7 g/cc.

### Evaluation Examples

The negative electrodes and rechargeable lithium battery cells of the Examples and Comparative Examples were evaluated in the following manner.

### Evaluation 1: Impregnation Properties of Electrolyte to Negative Electrode

The negative electrode according to Example 1 was manufactured as a specimen having width*length=3 cm*5 cm. 0.02 g of the electrolyte according to Example 1 was dropped on the specimen and left for 1 minute. Thereafter, an amount of electrolyte immersed in the specimen among 100 wt% of the electrolyte dropped on the specimen was evaluated as a value from 0 to 5 according to the following criteria, and the evaluation results are shown in Table 1.
0: If the amount of electrolyte immersed in the specimen is 0 wt% or more and less than 10 wt%
1 : If the amount of electrolyte immersed in the specimen is 10 wt% or more and less than 20 wt%
2: If the amount of electrolyte immersed in the specimen is 20 wt% or more and less than 40 wt%
3: If the amount of electrolyte immersed in the specimen is 40 wt% or more and less than 60 wt%
4: If the amount of electrolyte immersed in the specimen is 60 wt% or more and less than 80 wt%
5: If the amount of electrolyte immersed in the specimen is 80 wt% or more and less than 100 wt%

Examples 2 to 5 and Comparative Examples 1 to 6 were evaluated in the same manner, and the evaluation results are shown in Table 1.

**Table 1**

| | Active mass density of negative electrode (g/cc) | Additive content in electrolyte (wt%) | | | Impregnation properties of electrolyte to negative electrode |
|---|---|---|---|---|---|
| | | First additive | Second additive | Third additive | |
| Comparative Example 1 | 1.65 | 0 | 0 | 0 | 3 |
| Comparative Example 2 | 1.67 | 0 | 0 | 0 | 2 |
| Comparative Example 3 | 1.7 | 0 | 0 | 0 | 1 |
| Comparative Example 4 | 1.7 | 10 | 0 | 0 | 1 |
| Comparative Example 5 | 1.7 | 0 | 1 | 0 | 1 |
| Comparative Example 6 | 1.7 | 0 | 0 | 1 | 1 |
| Example 1 | 1.7 | 5 | 1 | 1 | 3 |
| Example 2 | 1.7 | 10 | 1 | 1 | 4 |
| Example 3 | 1.7 | 10 | 1 | 2 | 5 |
| Example 4 | 1.75 | 10 | 1 | 2 | 5 |
| Example 5 | 1.8 | 10 | 1 | 2 | 4 |

### Evaluation 2: Evaluation of High-temperature and High-voltage Charge and Discharge

### Cycle Characteristics

The rechargeable lithium battery cells were charged and discharged 200 times under the conditions of 45 °C, 2.0 C charge (CC/CV, 4.53 V, 0.025 C Cut-off)/1.0 C discharge (CC, 3V Cut-off).

The thickness increase rates were calculated according to Equation 1, capacity retention rates were calculated according to Equation 2, and the results are shown in Table 2. Thickness increase rate = {(Full charge thickness after 200 cycles) - (Full charge thickness after 1 cycle)} / (Full charge thickness after 1 cycle) * 100

In Equation 1, "full charge thickness" refers to a thickness of the rechargeable lithium battery cells measured after charging at SOC 100% (if the total charge capacity of the battery is set at 100%, charged to 100% charge capacity) after each cycle. Capacity retention rate = (discharge capacity after 200 cycles / discharge capacity after 1 cycle) * 100

**Table 2**

| | Active mass density of negative electrode (g/cc) | Additive content in electrolyte (wt%) | | | High-temperature and high-voltage charge and discharge characteristics of rechargeable lithium battery cells | |
|---|---|---|---|---|---|---|
| | | First additive | Second additive | Third additive | Thickness increase rate (%) | Capacity retention rate (%) |
| Comparative Example 1 | 1.65 | 0 | 0 | 0 | 13.1 | 87 |
| Comparative Example 2 | 1.67 | 0 | 0 | 0 | 15.9 | 81 |
| Comparative Example 3 | 1.7 | 0 | 0 | 0 | 15.8 | 83 |
| Comparative Example 4 | 1.7 | 10 | 0 | 0 | 16.0 | 81 |
| Comparative Example 5 | 1.7 | 0 | 1 | 0 | 15.5 | 75 |
| Comparative Example 6 | 1.7 | 0 | 0 | 1 | 17.8 | 72 |
| Example 1 | 1.7 | 5 | 1 | 1 | 13.7 | 90 |
| Example 2 | 1.7 | 10 | 1 | 1 | 10.5 | 89 |
| Example 3 | 1.7 | 10 | 1 | 2 | 8.8 | 92 |
| Example 4 | 1.75 | 10 | 1 | 2 | 9.3 | 91 |
| Example 5 | 1.8 | 10 | 1 | 2 | 11.5 | 89 |

### Summary

Referring to Tables 1 and 2, if an electrolyte included no additives at all (Comparative Examples 1 to 3), as the active mass density of a negative electrode was increased from 1.65 g/cc to 1.7 g/cc, impregnation properties of the electrolyte to the negative electrode were decreased, thicknesses of battery cells were increased during the high-temperature and high-voltage charge and discharge, and capacity retention rates were reduced during the high-temperature storage.

However, when the active mass density of the negative electrode was equally set at 1.7 g/cc, compared to an electrolyte including no additives at all (Comparative Example 3), the electrolytes simultaneously including the first to third additives (Examples 1 to 3) exhibited increased impregnation properties of the electrolytes to the negative electrode, decreased thicknesses of battery cells during the high-temperature and high-voltage charge and discharge, and increased cycle-lives.

On the other hand, an electrolyte including any one of the first to third additives (Comparative Examples 4 to 6) unstably formed an SEI film on the negative electrode surface to grow lithium dendrites and thus sharply deteriorate capacity retention rate during the high-temperature and high-voltage charge and discharge. Accordingly, it is beneficial to use the electrolyte simultaneously including the first to third additives.

Furthermore, the electrolyte simultaneously including the first to third additives, even though the active mass density of the negative electrode was increased from 1.7 g/cc to 1.8 g/cc (Examples 4 and 5), suppressed an increase in a battery thickness and a decrease in a cycle-life during the high-temperature and high-voltage charge and discharge.

### Description of Symbols

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A rechargeable lithium battery (100), comprising:
a positive electrode (10) comprising a positive electrode active material;
a negative electrode (20) comprising a negative electrode active material; and
an electrolyte,
wherein:
an active mass density of the negative electrode is greater than or equal to 1.7 g/cc, and
the electrolyte comprises:
a lithium salt;
a non-aqueous organic solvent;
a first additive represented by Chemical Formula 1;
a second additive represented by Chemical Formula 2; and
a third additive represented by Chemical Formula 3:
Chemical Formula 1 R¹-O-R²
wherein, in Chemical Formula 1,
R¹ and R² are each independently a fluorine atom or a C1 to C10 fluoroalkyl group; 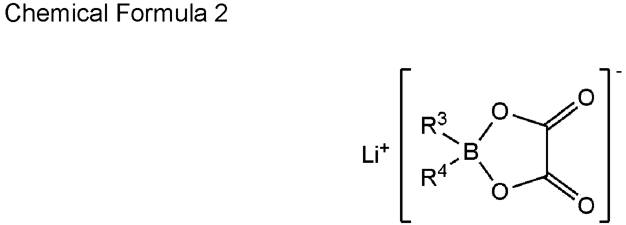
wherein, in Chemical Formula 2,
R³ and R⁴ are each independently a halogen atom or a C1 to C10 fluoroalkyl group; and 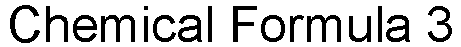 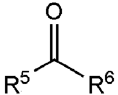
wherein, in n Chemical Formula 3,
R⁵ and R⁶ are each independently a fluorine atom or a C1 to C10 fluoroalkyl group.

2. The rechargeable lithium battery (100) as claimed in claim 1, wherein:
the first additive is represented by Chemical Formula 1-1: 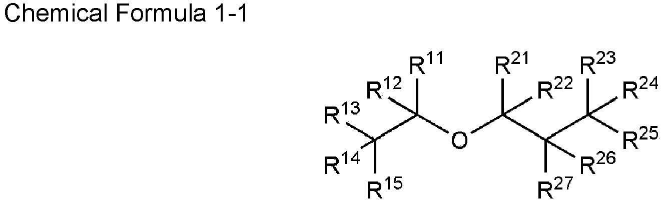
wherein, in Chemical Formula 1-1,
R¹¹ to R¹⁵ are each a hydrogen atom or a fluorine atom, provided that at least one selected from R¹¹ to R¹⁵ is a fluorine atom; and
R²¹ to R²⁷ are each a hydrogen atom or a fluorine atom, provided that at least one selected from R²¹ to R²⁷ is a fluorine atom.

3. The rechargeable lithium battery (100) as claimed in claim 2, wherein:
the first additive is represented by Chemical Formula 1-1-1:

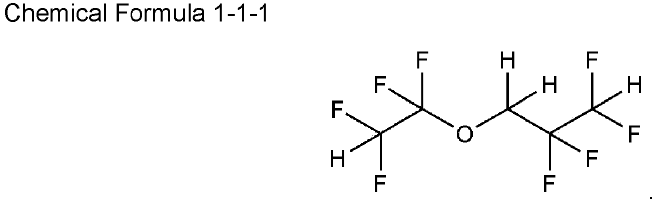

4. The rechargeable lithium battery (100) as claimed in any one of the preceding claims, wherein in Chemical Formula 2:
both R³ and R⁴ are fluorine atoms.

5. The rechargeable lithium battery (100) as claimed in any one of the preceding claims, wherein:
the third additive is represented by Chemical Formula 3-1: 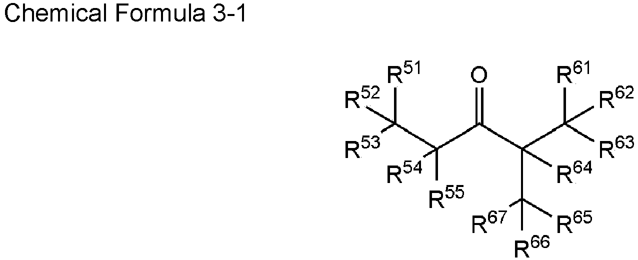
wherein, in Chemical Formula 3-1,
R⁵¹ to R⁵⁵ are each a hydrogen atom or a fluorine atom, provided that at least one of R⁵¹ to R⁵⁵ is a fluorine atom; and
R⁶¹ to R⁶⁷ are each a hydrogen atom or a fluorine atom, provided that at least one of R⁶¹ to R⁶⁷ is a fluorine atom.

6. The rechargeable lithium battery (100) as claimed in claim 5, wherein:
the third additive is represented by Chemical Formula 3-1-1:

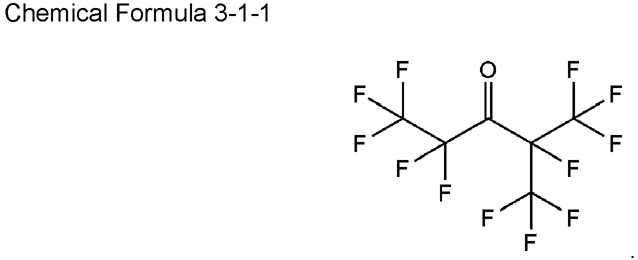

7. The rechargeable lithium battery (100) as claimed in claim 1, wherein:
the first additive is included in an amount of 1 to 20 wt% based on a total amount of the electrolyte; and/or
the second additive is included in an amount of 1 to 10 wt% based on a total amount of the electrolyte; and/or
the third additive is included in an amount of 1 to 10 wt% based on a total amount of the electrolyte.

8. The rechargeable lithium battery (100) as claimed in any one of the preceding claims, wherein:
1 to 100 parts by weight of the second additive and 1 to 100 parts by weight of the third additive are included based on 10 parts by weight of the first additive.

9. The rechargeable lithium battery (100) as claimed in any one of the preceding claims, wherein:
the non-aqueous organic solvent comprises a carbonate-based solvent and a propionate-based solvent.

10. The rechargeable lithium battery (100) as claimed in claim 9, wherein:
the propionate-based solvent is included in an amount of greater than or equal to 70 volume% based on a total amount of the non-aqueous organic solvent.

11. The rechargeable lithium battery (100) as claimed in any one of the preceding claims, wherein:
the lithium salt is LiPF₆.

12. The rechargeable lithium battery (100) as claimed in any one of the preceding claims, wherein:
a concentration of the lithium salt is 0.1 M to 2.0 M.

13. The rechargeable lithium battery (100) as claimed in any one of the preceding claims, wherein:
the positive electrode active material comprises lithium nickel-based oxide, lithium cobalt-based oxide, lithium manganese-based oxide, a lithium iron phosphate-based compound, cobalt-free lithium nickel-manganese-based oxide, or a combination thereof.

14. The rechargeable lithium battery (100) as claimed in any one of the preceding claims, wherein:
the negative electrode active material comprises a carbon-based negative electrode active material, a Si-based negative electrode active material, or a combination thereof.

15. The rechargeable lithium battery (100) as claimed in any one of the preceding claims, wherein:
the rechargeable lithium battery has an upper charge limit voltage of greater than or equal to 4.5 V.
